# EUROPÄISCHE PATENTANMELDUNG

(11) **EP 1 900 938 A1**
(43) Veröffentlichungstag der Anmeldung: **19.03.2008**
(21) Anmeldenummer: 07017728.2
(22) Anmeldetag: 11.09.2007
(51) Int. Cl.: F03D 9/00, F03D 11/00, F03D 11/04

(54) **Windfarmen mit hoher Ausnutzung mit direkt angetriebenen Generatoren mit Fremdbelüftung**

(30) Priorität: 15.09.2006 DE 102006043470
(71) Anmelder: Garzmann, Traugott, 38106 Braunschweig (DE)
(72) Erfinder: Garzmann, Traugott, 38106 Braunschweig (DE)

(57) **Zusammenfassung**

Windfarmen mit Windturbinen mit hoher Ausnutzung und direkt angetriebenen Generatoren mit Fremdbelüftung zeichnen sich dadurch aus, dass die vier Türme der Windturbinen in vier verschiedenen Höhenlagen in einem Rastermaß bezogen auf einen ebene Fläche angeordnet werden, während der Turmabstand der Windturbinen das doppelte Rastermaß beträgt.

## Beschreibung

Windfarmen mit hoher Ausnutzung sind im Gegensatz zu Windparks mit Windturbinen in Standardauslegung Anlagen in einem geschlossenen Industriegebiet mit hohen mittleren Windgeschwindigkeiten. Sie ergeben mit kleinen Turbinen durch ihre besondere Anordnung und Auslegung Windkraftanlagen mit hoher Ausnutzung der Windenergie und Energieertrag je Flächeneinheit sowie einen geringeren Aufwand an aktivem Material.

Windkraftanlagen müssen je nach Lage wegen Windböen von 50 m/s und mehr für entsprechende Überlebenswindgeschwindigkeiten ausgelegt werden. Ihre Nennleistung wird in der üblichen Standardauslegung bei einer Windgeschwindigkeit von etwa 12,5 m/s erreicht. Bei höheren Windgeschwindigkeiten wird die Leistung bis zur Abschaltung bei Sturm konstant gehalten, wobei die mit der dritten Potenz der Windgeschwindigkeit weiter ansteigende Leistung des Windes nur zu einem geringen Teil genutzt wird.

Dabei werden meist Windturbinen mit großen Durchmessern verwendet. Das Gewicht der Flügel und der Türme steigt bei ähnlicher Vergrößerung mit der dritten Potenz der linearen Abmessungen, während die Leistung bei konstanter Windgeschwindigkeit nur mit dem Quadrat des Durchmessers steigt. Anlagen mit großen Turbinen ergeben daher ein höheres Leistungsgewicht.

Die Leistung der Windturbinen sinkt mit der dritten Potenz der Windgeschwindigkeit. So werden in Gebieten mit geringen Windgeschwindigkeiten die Anlagen unwirtschaftlich, da die Aufwendungen für die Anlagen für das Überleben bei Sturm im Verhältnis zur Leistung zu groß werden, so dass diese nur mit Subventionen für die Betreiber profitabel werden. Derartige Anlagen in Standardauslegung haben zum Beispiel bei einer mittleren Windgeschwindigkeit von 5 m/s eine Nennleistung etwa vom Achtfachen der mittleren Jahresleistung und belasten die Netze und Kraftwerke, die für diese Leistungsspitzen ausgelegt werden müssen.

In Gebieten mit hohen Windgeschwindigkeiten wird dagegen die Windenergie in der Standardauslegung mit einem schlechten Wirkungsgrad genutzt. Bei einer mittleren Windgeschwindigkeit von 10 m/s beträgt dann das Verhältnis der Nennleistung zur mittleren Jahresleistung etwa 2 und es wird bereits im Bereich des größten Leistungsumsatzes auf konstante Leistung umgeschaltet, während die Leistung des Windes mit der dritten Potenz der Windgeschwindigkeit weiter ansteigt. Energiekonzerne nutzen dies, indem sie mit großen, an sich nicht optimalen Anlagen bei den geringen Anschlusswerten nur wenig in ihre Netze und Kraftwerke investieren müssen. Bei Starkwind und Schwachlast im Netz drosseln sie die Windenergie oder schalten sie ganz ab. Dies ist eine große Verschwendung von Windenergie, Material und Flächen.

In den Windfarmen mit hoher Ausnutzung, für die Schutzrechte angemeldet sind, werden diese Missstände bei der Nutzung der Windenergie beseitigt. Hier werden kleine Turbinen in einem Rastermaß in vier verschiedenen Höhenlagen angeordnet, wobei der Turmabstand das doppelte Rastermaß beträgt. Da bei konstanter Windgeschwindigkeit sowohl die Leistung der Turbinen mit dem Durchmesser als auch ihr Flächenbedarf bei konstantem Verhältnis vom Turmabstand zum Turbinendurchmesser quadratisch ansteigen, wird die Leistung je Flächeneinheit etwa vervierfacht.

Die Turbinen werden für ihre Nennleistung etwa beim Doppelten der mittleren Windgeschwindigkeit ausgelegt. Dabei ergibt sich eine weitgehende Ausnutzung der Windenergie und der maximale Energieumsatz findet etwa in dem Bereich der optimalen Schnellläufigkeit mit gutem Wirkungsgrad statt. Die kleinen Turbinen treiben kompakte Ringgeneratoren mit kleinen Polteilungen und einem vom Wind durchströmten Gehäuse mit Doppelmantel aus seewasserbeständigem Aluminiumguss direkt an. Vor dem Lufteintritt in den Doppelmantel wird auf der stromlinienförmigen Nabe der Turbine ein radiales Schutzgitter angeordnet, das größere Fremdkörper abschleudert. Die Generatoren können vollkommen geschlossen mit innerer Luftumwälzung oder mit durchzugsbelüftetem Polrad mit Fremdbelüftung ausgeführt werden. Bei der vollkommen geschlossenen Ausführung wälzt ein auf der Generatorwelle angeordneter Fremdlüfter die Innenluft zwischen dem Polrad und Luftschlitzen im inneren Gehäusemantel um. Das durchzugsbelüftete Polrad wird mit gefilterter Luft von einem äußeren Fremdlüfter gekühlt, während der vollkommen vergossene Stator vom Wind im Doppelmantel gekühlt wird.

Dabei ergibt sich durch das höhere zulässige Temperaturgefälle zur Polradentwicklung eine höhere Ausnutzung. Noch höhere Ausnutzungen sind bei der Erregung mit Permanentmagneten möglich. Das dazu benötigte Magnetmaterial mit Seltenerdmetallen ist jedoch bereits heute so teuer, dass bei größerem Bedarf die Preise so stark ansteigen würden, dass ihre Verwendung unwirtschaftlich wäre.

Die kleinen, direkt angetriebenen Generatoren ergeben bei den möglichen kleinen Polteilungen Frequenzen im Bereich der üblichen Netzfrequenzen und eine entsprechend hohe Ausnutzung und ein geringes Leistungsgewicht.

Die inaktiven Teile der Generatoren können ebenfalls preisgünstig mit Gussteilen in großen Stückzahlen hergestellt werden. Die Gondeln mit den angeflanschten Generatoren bieten dem Sturm nur eine geringe Angriffsfläche.

Bei den großen Turbinen mit Getriebe herrschen am Umfang erhebliche Unterschiede in der Windrichtung und Geschwindigkeit, so dass die Anstellwinkel der Flügel bei jeder Umdrehung einzeln nachgestellt werden müssen, um Drehmomentstöße auf das Getriebe zu vermeiden. Die Getriebe und Generatoren ergeben einen aufwändigen Aufbau mit Ölkühlern, Wasserkühlern und Wärmetauschern. Sie erfordern häufige Wartung. Bei den Windparks mit Turbinen in einer Höhenlage ist wegen der erforderlichen Mindestabstände keine Wohnbebauung möglich, das gesamte Land wird zu einem Gewerbegebiet verspargelt. In den Windfarmen wird dagegen wegen der geringeren Turmabstände bereits nach einer kürzeren Strecke eine größere freie Fläche erforderlich, in der sich der Wind wieder sammeln kann. Hier sind auch Wohnsiedlungen möglich. Die optimalen Abmessungen der Windfarmen ergeben sich aus dem Verhältnis des Turmabstandes zum Turbinendurchmesser, den Nabenhöhen der Turbinen in den verschiedenen Höhenlagen, der Hauptwindrichtung und den Anstellwinkeln der Turbinen.

Die hohe Ausnutzung der Flächen kommt besonders bei Anlagen auf Hügeln oder Bergrücken zum Tragen. Hier können nur wenige große Turbinen mit noch geringerer Ausnutzung der Flächen erreicht werden, während mit den kleinen Turbinen mit geringerem Turm- und Nabenabstand der Wind weitergehend genutzt werden kann. Bei vorherrschenden Windrichtungen und begrenzten Flächen kann das Raster auch rechteckig sein. Die Windfarmen werden zu einem abgeschlossenen Industriegebiet mit Wegen im Rastermaß zur Montage und Wartung der Anlagen. An den Wegen können Kabelkanäle und Stützpunkte für Abspannungen der Türme angeordnet werden. In den Windparks ist dies nicht möglich, da hier meist nur das Land unter dem Turm verpachtet ist. Die hohen Türme können zum Mindesten unterhalb der Turbinen Material und Kosten sparend mit geringem Luftwiderstand als Gittertürme mit Rohrprofilen ausgeführt werden. Die Parzellen zwischen den Wegen können industriell genutzt werden, so dass das gesamte Gelände weitgehend ausgenutzt wird.

In Industriegebieten beträgt der ständig zulässige Schallleistungspegel 70 dB (A), während in reinen Wohngebieten in der Nacht nur 35 dB (A) erlaubt sind. Die kleinen Windturbinen der Farmen können daher mit höheren Umfangsgeschwindigkeiten betrieben werden. Damit ergibt sich eine noch höhere Ausnutzung der direkt angetriebenen Generatoren.

Im folgenden Beispiel sind bei einer mittleren Windgeschwindigkeit von 10 m/s eine Turbine in Standardauslegung mit 80 m Durchmesser und einer Leistung von 3000 kW einer Anlage in einer Farm mit Turbinen von 20 m Durchmesser und einer Leistung von 800 kW gegenübergestellt. Das Verhältnis vom Turm zum Turbinendurchmesser ist dabei mit 5 angenommen. Damit ergibt sich für die durchmesser ist dabei mit 5 angenommen. Damit ergibt sich für die Standardturbine ein Flächenbedarf von 400 x 400 = 160.000 m² oder eine Leistungsdichte von 19 W/m². Bei den 4 Turbinen im Rastermaß mit einer Leistung von 3200 kW und einem Flächenbedarf von 100 x 100 = 10.000 m² beträgt dagegen die Leistungsdichte 320 W/m². Bezogen auf die mittlere Jahresleistung beträgt die Leistungsdichte durch die stärkere Nutzung der weniger häufigen hohen Windgeschwindigkeiten in den Windfarmen etwa 80 W/m beziehungsweise 10 W/m² in den Windparks.

Ein Flügel der großen Turbine wiegt etwa 6400 kg, während sich bei ähnlicher Verkleinerung für einen Flügel der kleinen Turbinen ein Gewicht von 100 kg ergibt. Inwieweit dies ausgenutzt wird, hängt von der Konstruktion und den Kosten der Herstellung ab. Wesentlich ist, dass sie im Gegensatz zu den großen Turbinen auch mit höheren Umfangsgeschwindigkeiten betrieben werden können. Bei den großen, auf die Flügelfläche bezogenen Leistungen der kleinen Turbinen sowie der geringen Masse und Wandstärke der Flügel ergibt sich bei Vereisung eine kurze Abtauzeit mit geringem Energieaufwand. Die kleinen Turbinen können auch vorteilhaft mit nur 2 Flügeln ausgeführt werden.

Der Rotordurchmesser von 20 m ist nur als Beispiel gewählt worden. Bei größerem Durchmesser erhöht sich der auf die Leistung bezogene Materialaufwand und es verringert sich die Anzahl der erforderlichen Komponenten, während sich bei kleineren Durchmessern der Materialaufwand verringert und die Anzahl der Komponenten steigt. Es müssen daher optimale Abmessungen ermittelt werden. Dabei ist zu berücksichtigen, dass eine hohe Zahl von Komponenten bei geringerem Materialaufwand nicht unbedingt zu einem höheren Gesamtpreis der Anlagen führt, da höhere Stückzahlen von Einzelteilen Rationalisierungseffekte bei der Fertigung ergeben. Daher sollten auch die Anschlussmaße und Leistungen der Turbinen und Generatoren genormt und auf wenige Größen beschränkt werden.

Bei einer mittleren Windgeschwindigkeit von 8 m/s würde sich die Leistung halbieren. In Gebieten mit noch geringeren Windstärken sollten in Europa zunächst keine Windfarmen errichtet werden, so lange noch günstigere Flächen verfügbar sind. Bei 6,3 m/s halbiert sich die Leistung nochmals und man kommt in den Bereich der Standardauslegung und der Aufwand für die Anlagen insbesondere mit großen Turbinen im Verhältnis zur Leistung wird zu hoch, so dass bei den heutigen Strompreisen die Anlagen subventioniert werden müssen.

Bei der weiteren intensiven Nutzung der Windenergie insbesondere mit Windfarmen mit hoher Ausnutzung in abgelegenen Gebieten mit hohen Windstärken ergeben sich immer größere Entfernungen zu den Kraftwerken, die die großen Leistungen aufnehmen und verteilen können und es werden neue Hochspannungsleitungen erforderlich. Diese werden von der Bevölkerung als Todesstreifen oder tote Zone abgelehnt und die Genehmigungsverfahren dauern bis zu 10 Jahren.

In den Windfarmen mit hoher Ausnutzung kann in Gebieten mit hohen Windstärken bereits heute vor Ort auf den Heizwert bezogen Wasserstoff durch Elektrolyse billiger erzeugt werden als es dem Preis von Erdöl oder Erdgas entspricht.

Damit ist es an der Zeit zum Energietransport von großen Mengen über große Entfernungen zum Wasserstoff als Energieträger überzugehen, wie dies bereits vor über 50 Jahren von Professor Eduard Justi als Wasserstoffwirtschaft und später von zahlreichen anderen Autoren vorgeschlagen wurde. Zur Umsetzung fehlte es bisher nur an der Herstellung von billigem Wasserstoff aus erneuerbaren Energien.

Der schwankende Windstrom mit geringem Marktwert wird dabei unabhängig von Stromnetzen und Kraftwerken zu einem jederzeit verfügbaren speicherbaren wertvollen Kraftstoff. Auf See herrschen allgemein wesentlich höhere mittlere Windstärken als an Land. Hier geht der Trend zu noch größeren Turbinen in Standardauslegung mit Durchmessern über 100 m. Für diese Anlagen sind in Deutschland nach der Neuauflage des EEG von 2005 Einspeisevergütungen von über 9 Cent für die kWh für die Dauer von 10 Jahren festgeschrieben, die sie in der Standardauslegung mit Anschluss an das Stromnetz wohl auch benötigen werden.

Auf See können in Wassertiefen bis zu etwa 40 m die Windfarmen auf Quadropiles errichtet werden. Diese bestehen aus 4 senkrechten Standrohren im Rastermaß mit Schwerkraftfundamenten, die oben über Kreuzköpfe mit waagerechten Trag- und Stützrohren zu einem stabilen, standfesten Gestell verbunden sind. Auf den Kreuzköpfen werden die Türme mit den Turbinen in den verschiedenen Höhenlagen errichtet. Bei geringen Wassertiefen und starker Gezeitenströmung können an den Tragrohren Propellerturbinen mit ihren Generatoren zur Nutzung der Strömung aufgehängt werden. Die Quadropiles können an der Küste gefertigt und auf ihren planierten Standort geschleppt werden.

An den Küsten ist insbesondere an den Badestränden für den Tourismus der Blick auf Windkraftanlagen unerwünscht. So müssen Windparks mit großen Turbinen, die bis auf eine Höhe von 150 m reichen, in einer Entfernung von über 30 km von der Küste entfernt errichtet werden, um durch die Erdkrümmung unsichtbar vom Ufer zu sein. Windfarmen mit hoher Ausnutzung sind niedriger, erfordern geringere Abstände und ergeben einen wesentlich höheren Energieertrag auf der zur Verfügung stehenden Fläche.

In größeren Wassertiefen können die Windfarmen auch auf schwimmend verankerten Rohrgittern im Rastermaß auf den Knotenpunkten errichtet werden. Bei hohem Seegang wird das Rohrgitter mit den Ankerwinden unter die Oberfläche des Wassers gezogen, da hier nur eine verhältnismäßig geringe Vertikalströmung vorherrscht.

An der Oberfläche wird dagegen das Rohrgitter von den Wellenbergen und Tälern stark beansprucht. Bei ruhiger See können Schiffe in Form von großen Schlauchboten mit einem Kran zu Wartungsarbeiten über das abgesenkte Rohrgitter zwischen den Türmen hindurch fahren. An der Arbeitsstelle werden diese dann durch Fluten der äußeren Tanks auf dem Rohrgitter abgesetzt.

Die Windturbinen werden im Bereich der Flügel auf schmalen Stahlrohrtürmen montiert. Im unteren Bereich ergeben Gittertürme mit Rohrprofilen und quadratischem Querschnitt eine große Standfläche auf dem Rohrgitter bei geringem Materialaufwand und Luftwiderstand.

Dabei sind gegenüber den Ausführungen mit Winkelprofilen mit wesentlich geringeren Trägheitsradien bei gleichem Querschnitt geringere gegen Korrosion zu schützende Oberflächen vorhanden und der Luftwiderstand und der Materialaufwand wird verringert. Auch .die schrägen Stäbe zur Versteifung werden rund oder als Rohre ausgeführt. Für die Verringerung des Luftwiderstands und damit der Kräfte auf die Anker bei Sturm werden die Rohrdurchmesser und die Wandstärken optimiert. Die einzelnen Rohre im Raster werden durch Flansche miteinander verbunden. Die Windfarmen mit den Rohrgittern werden an der Küste im Trockendock komplett gefertigt und zum Ankerplatz geschleppt.

Bei den großen auf See anfallenden Leistungen ist es unwirtschaftlich, diese mit Strom über Seekabel an Land zu transportieren, zumal dort meist in der Nähe keine Kraftwerke vorhanden sind, die große schwankende Leistungen aufnehmen und verteilen können. Daher muss auch auf See der Windstrom vor Ort durch Elektrolyse für den Energietransport in Wasserstoff umgewandelt und in die Pipelines geleitet werden. Die Windfarmen können dabei autark ohne Stromverbindung zum Land betrieben werden, indem sie ihren Betriebsstrom selbst erzeugen. Ein wesentlicher Anteil wird für die Erregung der Generatoren benötigt. Dies könnte mit der Erregung durch Permanentmagnete vermieden werden. Dabei ergibt sich sogar noch eine höhere Ausnutzung mit entsprechender Einsparung am aktiven Material im Stator. Die benötigten Magnetmaterialien mit Seltenerdmetallen sind jedoch bereits heute so teuer, dass beim Bedarf von größeren Mengen die Preise so stark ansteigen würden, dass auch hier ihre Verwendung unwirtschaftlich wird. Daher werden besser für die größeren Verbraucher einer oder mehrerer Windgeneratoren zur Erzeugung der konstanten Betriebsspannung ausgelegt. Bei ausreichend Wind kann auch mit dem überschüssigen Betriebsstrom Wasserstoff erzeugt werden.

Bei Flaute kann der Strom für die Sicherheits- und Überwachungseinrichtungen mit Wasserstoff aus der Pipeline, mit Brennstoffzellen oder Dieselgeneratoren erzeugt werden. Das für die Elektrolyse benötigte reine Wasser kann mit verhältnismäßig geringem Energieaufwand mit einer Meerwasserentsalzungsanlage gewonnen werden. Die Module mit den Zellen für die Elektrolyse können den einzelnen Generatoren oder denen eines Rasters zugeordnet werden, wobei der Wasserstoff mit niedrigem Ausgangsdruck innerhalb der Farm gesammelt wird und mit einem Verdichter auf den für die Pipeline zum Land erforderlichen Druck gebracht wird.

Bei sehr großer Entfernung von Häfen mit Pipelines und Tanks für flüssigen Wasserstoff kann auf Quadropiles, schwimmenden Rohrgittern oder Inseln dort erzeugter flüssiger Wasserstoff mit Tankschiffen an die Küste gebracht werden. Dabei fehlt jedoch die Speicherwirkung der Pipeline, so dass es meist günstiger ist, mehrere grö-ßere Windfarmen mit ihrer Erzeugung von gasförmigem Wasserstoff durch eine interne Pipeline zusammenzufassen und dann mit einer gemeinsamen Leitung an das Netz der Pipelines anzuschließen. Auch auf See sind günstige Standorte, die auch genehmigt werden, nur beschränkt verfügbar. Mit den großen Turbinen in Standardauslegung und den hier üblichen Turmabständen vom 7-fachen oder mehr des Turbinendurchmessers wird daher auch hier Windenergie, Material und Fläche verschwendet.

Auch auf See sollten daher keine unwirtschaftlichen Turbinenmonster mehr genehmigt werden.

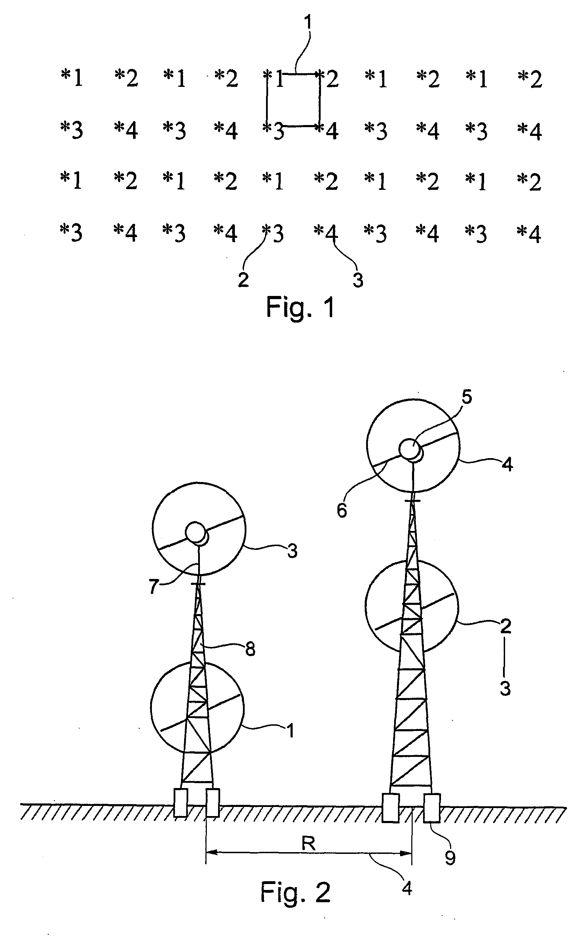

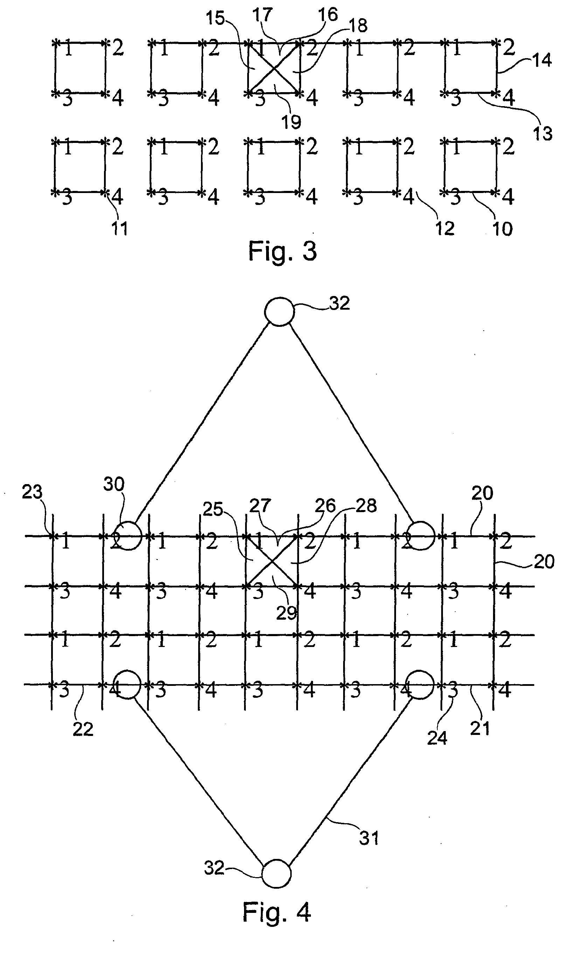

## Patentansprüche

1. Windfarmen mit Windturbinen mit hoher Ausnutzung und direkt angetriebenen Generatoren mit Fremdbelüftung, **dadurch gekennzeichnet, dass** die vier Türme der Windturbinen in vier verschiedenen Höhenlagen in einem Rastermaß, bezogen auf eine ebene Fläche angeordnet werden, während der Turmabstand der Windturbinen das doppelte Rastermaß beträgt.

2. Windfarmen nach Anspruch 1, **dadurch gekennzeichnet, dass** die Nennleistung des Generators etwa beim Doppelten der mittleren Windgeschwindigkeit erreicht wird.

3. Windfarmen nach Anspruch 1 und 2, **dadurch gekennzeichnet, dass** die Windfarmen auf See auf Quadropiles im Rastermaß angeordnet werden.

4. Windfarmen nach Anspruch 1 und 2, **dadurch gekennzeichnet, dass** die Windfarmen auf einem auf See schwimmend verankerten Rohrgitter im Rastermaß angeordnet werden, das bei hohem Seegang unter die Wasseroberfläche gezogen werden kann.
